# EUROPÄISCHE PATENTSCHRIFT

(11) **EP 3 514 637 B1**
(45) Veröffentlichungstag und Bekanntmachung des Hinweises auf die Patenterteilung: **11.05.2022**
(21) Anmeldenummer: 18153049.4
(22) Anmeldetag: 23.01.2018
(51) Int. Cl.: G05B 19/042

(54) **SCHALTSCHRANKMODUL**
SWITCH CABINET MODULE
MODULE D'ARMOIRE DE DISTRIBUTION

(43) Veröffentlichungstag der Anmeldung: 24.07.2019
(73) Patentinhaber: Wieland Electric GmbH, 96052 Bamberg (DE)
(72) Erfinder: Laubsch, Jörg, 14059 Berlin (DE)
(74) Vertreter: 2K Patentanwälte Blasberg Kewitz & Reichel

(56) Entgegenhaltungen:
- EP-A1- 2 713 228
- DE-U1-202011 107 014
- US-A1- 2015 134 086

## Beschreibung

Die Erfindung betrifft ein Schaltschrankmodul, ausgebildet zum, gemäß einer Sicherheitsvorschrift, sicheren Ein- und Ausschalten eines elektrischen Verbrauchers, umfassend eine Anzahl von Ausgangsklemmen zum Anschluss von Aktoren zum Schalten des elektrischen Verbrauchers, eine Anzahl von Eingangsklemmen zum Anschluss von Sensoren, einen Prozessor, der Ausgangssignale an den Ausgangsklemmen auf Basis einer hinterlegten Programmierung und Eingangssignalen an den Eingangsklemmen erzeugt, und ein Schnittstellenmodul, das dem Prozessor zugeordnete Diagnose- und/oder Statusdaten empfängt und über ein Kommunikationsprotokoll extern bereitstellt.

US 2015 134086 offenbart einen Schaltschrank, der über ein Display verfügt, an dem ein Anschluss für einen externen Computer vorgesehen ist. EP 27 13 228 offenbart die Möglichkeit, Daten von einem Automatisierungssystem per Leuchtdiode auszusenden.

Schaltschrankmodule der eingangs genannten Art werden in Form von Sicherheitsschaltgeräten oder Sicherheitssteuerungen vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge etc. Hierzu wird die Stromversorgung für den elektrischen Verbraucher über Ausgangsklemmen der Sicherheitssteuerung gesteuert, die zur Erfüllung der einschlägigen Sicherheitsvorschriften, z.B. der Norm EN ISO 13849, ausgelegt sind. Dazu sind die internen Schaltkreise typischerweise redundant ausgestaltet, z.B. solche zum Ein- und Ausschalten des elektrischen Verbrauchers über zwei in Reihe geschaltete Relais, die von getrennten Stromkreisen gesteuert werden.

Sicherheitsschaltgeräte und -steuerungen weisen üblicherweise eine Anzahl von Ein- und Ausgangsklemmen zum Anschluss der Arbeitskontakte von Gebern bzw. Aktoren auf. Geber sind z.B. Not-Aus-Schalter oder Positions- oder Stellungsüberwachungen wie z.B. eine Schutztür, eine Lichtschranke, eine Schaltmatte etc. Sie dienen zur Ermittlung eines sicherheitsrelevanten Zustandes. Aktoren sind z.B. Relais, Schütze etc., mit denen - wie oben erläutert - der elektrische Verbraucher geschaltet wird. Die Geber haben dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll die Stromzufuhr zu dem elektrischen Verbraucher dann unterbrochen werden, wenn der Geber nicht mehr in der Position "sicher" ist. Darüber hinaus kann es aber auch weitere Geber geben, wie z.B. Nachlaufüberwachungen, die Zusatzinformationen zur Bestimmung einer nicht sicheren Situation oder sonstige Diagnoseinformationen liefern.

Die Beschaltung der Ausgangsklemmen erfolgt durch einen Prozessor des Moduls, welcher üblicherweise Teil eines Mikrocontrollers ist. Dieser wertet die Signale der Eingangsklemmen auf Basis eines hinterlegten, ggf. durch den Benutzer variierbaren Programms aus und legt auf dieser Basis die Signale der Ausgangsklemmen entsprechend fest. Während des Betriebs des Moduls können dabei allerdings Fehler auftreten, so dass ein Benutzereingriff notwendig ist. Zur Ermittlung der Fehlerursache oder auch zur Wartung des Moduls ist es dabei wünschenswert, Informationen bezüglich Status und Diagnose des Moduls zu erhalten. Hierfür ist eine entsprechende Schnittstelle und ein Kommunikationsprotokoll vorzusehen.

Aufgrund des technischen Aufwands und der damit verbundenen Kosten einer entsprechend komplexeren Schnittstelle beschränkt diese sich bei bisher bekannten Schnittstellen in der Regel auf eine Diagnoseleuchte. Wird ein interner oder externer Fehler detektiert, wird diese Fehlerleuchte angesteuert. Es ist jedoch nicht ersichtlich, ob es sich um einen behebbaren oder nicht-behebbaren Fehler handelt. Ggf. können hierbei noch durch entsprechende Ansteuerung durch den Prozessor Blinkcodes der Fehlerleuchte definiert werden, so dass zumindest einige wenige Unterscheidungen von Fehlern mitteilbar sind. Alles in allem bleibt das so definierte Kommunikationsprotokoll aber sehr rudimentär.

Es ist daher Aufgabe der Erfindung, ein Schaltschrankmodul, ausgebildet zum gemäß einer Sicherheitsvorschrift sicheren Ein- und Ausschalten eines elektrischen Verbrauchers, anzugeben, welches ein Auslesen von Diagnose- und Statusdaten auf technisch einfache Weise ermöglicht.

Diese Aufgabe wird erfindungsgemäß gelöst, indem das Schnittstellenmodul eine Infrarot-Leuchtdiode umfasst und das Kommunikationsprotokoll einen seriellen digitalen Datenstrom definiert.

Die Erfindung geht dabei von der Überlegung aus, dass eine Übertragung von Status- und Diagnosedaten nur über ein komplexeres Kommunikationsprotokoll möglich ist, welches mit digitalen Mitteln ausgelesen wird. Hierbei ergibt sich aber das Problem des Platzbedarfs: Schaltschrankmodule weisen häufig nur eine geringe geometrische Ausdehnung auf, sind in einer Reihe im Schaltschrank verbaut und nur von vorne erreichbar. Rückseiten und Seitenteile des Moduls sind daher nicht für die Bedienung verfügbar. Auf den Ober- und Unterseiten sind - soweit von vorne erreichbarüblicherweise die Klemmen angeordnet. Daher verbleiben nur wenige Quadratzentimeter in der Mitte der Frontseite für entsprechende Bedienfelder. Hier sind in der Regel Statusleuchten, häufig noch Einstellräder oder Einschübe z.B. für Speicherkarten zum Übertragen einer Programmierung vorhanden. Der verfügbare Platz für eine Diagnoseschnittstelle ist daher minimal, so dass z.B. für eine kabelgebundene Schnittstelle bereits zu wenig verfügbarer Raum zur Verfügung stehen kann.

Kleinere, modernere kabelgebundene Schnittstellen wie z.B. Universal Serial Bus (USB) weisen das Problem auf, dass entsprechende fertige Bauteile von Drittanbietern solcher Bauteile verwendet werden müssen. Hier ergibt sich zum einen im Bereich der Sicherheitstechnik das Problem der Nachweisbarkeit der funktionalen Sicherheit im Rahmen z.B. einer TÜV-Abnahme, zum anderen erhöht eine solche Schnittstelle die technische Komplexität nicht unerheblich und damit auch den Preis eines solchen Moduls. Darüber hinaus bieten derartige Schnittstellen auch ein Einfallstor für Probleme bezüglich der Elektromagnetischen Verträglichkeit (EMV): Hier bestehen gerade bei funktional sicheren Modulen hohe Anforderungen, die nur unter erheblichem Aufwand zu erfüllen sind.

Eine Möglichkeit zur Umgehung insbesondere der Platzproblematik wäre die Verwendung einer drahtlosen Schnittstelle. Hier sind verschiedene Technologien denkbar, z.B. Bluetooth, Wireless Local Area Network (WLAN) oder Near Field Communication. Auch bei diesen Systemen ergibt sich jedoch das o.g. Problem der Notwendigkeit von Drittanbietermodulen, deren Rückwirkungsfreiheit auf die sicherheitsrelevanten Systeme ggf. nicht nachweisbar ist und die die technische Komplexität des Systems erheblich erhöhen. Bei funkbasierten Systemen wie Bluetooth oder WLAN ergibt sich aber ebenfalls das bereits oben erläuterte Problem der Elektromagnetischen Verträglichkeit (EMV). Zudem ist die Identifizierung des konkret zu diagnostizierenden Systems problematisch, da bei einem Schaltschrank mit einer Vielzahl von Modulen das Signal zugeordnet werden muss. Das letzte Problem könnte ggf. durch die NFC-Technik gelöst werden, allerdings kann NFC wegen des hohen Platzbedarfs für die hierfür notwendige Leiterschleife problematisch sein.

Im Zusammenhang mit diesem beschriebenen vielschichtigen Problemkreis hat sich überraschend herausgestellt, dass die Verwendung einer Infrarot-LED als Diagnoseschnittstelle für ein funktional sicheres Schaltschrankmodul sämtliche dargestellten Probleme löst. Über die Infrarot-Schnittstelle kann ein serieller digitaler Datenstrom auf kleinster Fläche nach außen geführt werden, der alle benötigten Status- und Diagnosedaten enthält.

In einer ersten vorteilhaften Ausgestaltung ist das Schaltschrankmodul als Sicherheitsschaltgerät ausgebildet. Ein derartiges Sicherheitsschaltgerät oder Sicherheitsrelais weist - sofern es wie beschrieben eine elektronische Auswertung mittels Mikrocontroller aufweist - bereits sämtliche Voraussetzungen für die Verbesserung mittels infrarotbasierter Diagnoseschnittstelle auf. Da die Infrarot-Leuchtdiode nur einen geringen technischen Mehraufwand bedingt, ist daher auch bei einfachen elektronischen Sicherheitsrelais, die nur für einen bestimmten Einsatzzweck konzipiert sind und wenig Einstellmöglichkeiten aufweisen, ein Vorsehen einer Infrarot-Diagnoseschnittstelle von besonderem Vorteil.

In einer zweiten vorteilhaften Ausgestaltung ist das Schaltschrankmodul als Modul einer modularen Sicherheitssteuerung ausgebildet. Modulare Sicherheitssteuerungen sind konfigurierbar und durch die Modularität können mehrere, unterschiedlich geartete Gebertypen angeschlossen werden. Dabei wird in der Regel ein Kopfmodul, in dem die (redundanten) Hauptprozessoren enthalten sind und das während der Laufzeit den Hauptteil der Auswertungsaufgaben leistet, um zusätzliche Erweiterungsmodule erweitert. Diese können besondere Aufgaben übernehmen, wie z.B. Schnittstellen zur Verfügung stellen, oder aber weitere Klemmen für Geber und Aktoren bereitstellen. Die Erweiterungsmodule sind dabei mit dem Kopfmodul in der Regel über einen Rückwandbus verbunden. Eine oben beschriebene Infrarot-Leuchtdioden-Diagnoseschnittstelle kann dabei sowohl am Kopfmodul als auch an den Erweiterungsmodulen vorgesehen sein.

Die Diagnosedaten umfassen vorteilhafterweise Warnungen und/oder Fehlerinformationen umfassen. Diese können beispielsweise jegliche Art von aufgetretenem Fehler identifizieren, wie z.B. Ausfall oder nicht ausreichende Spannungsversorgung, ungültige Konfigurationen etc. Auch Warnungen z.B. hinsichtlich bestimmter interner Fehler, die aber noch nicht sicherheitskritisch sind, können übermittelt werden.

Die Statusdaten umfassen hingegen vorteilhafterweise den Zustand der Ein- und Ausgangsklemmen, d.h. deren aktuellen logischen oder physikalischen Schaltwert und/oder einen Gerätestatus des Schaltschrankmoduls, z.B. ob das System in Betrieb ist, in einem Konfigurationsmodus ist oder ähnliches. Die Statusdaten können bevorzugt auch eine Information enthalten, die die aktuelle Konfiguration des Schaltschrankmoduls anzeigt. Dies ist von besonderem Vorteil bei Sicherheitsschaltgeräten, deren Konfiguration über die vorgenommene Verdrahtung vorgenommen wird. Durch die Codierung der Konfigurationinformation im Infrarotsignal erhält der Benutzer eine Rückmeldung, ob die von ihm vorgenommene Verdrahtung auch tatsächlich zur von ihm gewünschten Konfigurationseinstellung geführt hat, d.h. ob die Verdrahtung korrekt vorgenommen wurde. Darüber hinaus können die Statusdaten auch Informationen zu eingestellten Parametern umfassen, insbesondere wenn das Schaltschrankmodul eine Einstellmöglichkeit von z.B. Verzögerungszeiten o.Ä. aufweist. Eine z.B. an einem Einstellrad eingestellte Verzögerungszeit kann dann über die Infrarotschnittstelle ausgelesen werden.

Im Zusammenhang mit der Erfindung wird weiterhin genannt, nicht aber beansprucht, ein Kommunikationsmodul, umfassend ein erstes Schnittstellenmodul, das Diagnose- und/oder Statusdaten über ein Kommunikationsprotokoll extern empfängt, ein zweites Schnittstellenmodul, welches die Diagnose- und/oder Statusdaten vom ersten Schnittstellenmodul empfängt und eine Schnittstelle umfasst, die zur Übertragung der Diagnose- und/oder Statusdaten an ein Mobilgerät ausgebildet ist, wobei die Diagnose- und/oder Statusdaten Daten eines Schaltschrankmoduls, ausgebildet zum gemäß einer Sicherheitsvorschrift sicheren Ein- und Ausschalten eines elektrischen Verbrauchers, sind, das erste Schnittstellenmodul einen Infrarot-Empfänger umfasst und das Kommunikationsprotokoll einen seriellen digitalen Datenstrom definiert

Ein derartiges Kommunikationsmodul dient dazu, die über die Infrarotschnittstelle empfangenen Diagnose- und Statusdaten über eine bei heutigen Mobilgeräten übliche Schnittstelle diesen Mobilgeräten zur Verfügung zu stellen. Das Kommunikationsmodul ist ein separates Gerät, mit dem die Daten per Infrarot empfangen und umgewandelt werden. Sie werden dann an ein Mobilgerät wie z.B. einen Laptop oder ein Smartphone weitergeleitet und können dort von einem Benutzer ausgewertet werden.

Der serielle digitale Datenstrom wird dabei vorteilhafterweise mittels UART übermittelt. Im Schaltschrankmodul umfasst das Schnittstellenmodul hierzu vorteilhafterweise ein Universal Asynchronous Receiver Transmitter (UART)-Bauelement, welches den digitalen Datenstrom erzeugt und an die Infrarot-Leuchtdiode sendet. Im Kommunikationsmodul umfasst das erste Schnittstellenmodul entsprechend vorteihafterweise ein Universal Asynchronous Receiver Transmitter (UART)-Bauelement, welches den digitalen Datenstrom von dem Infrarot-Empfänger empfängt und an das zweite Schnittstellenmodul weiterleitet. In beiden Fällen kann das UART-Bauelement hierbei als eigenständiges elektronisches Bauelement (UART-Chip oder Baustein) oder als Funktionsblock eines höherintegrierten Bauteils (z.B. dem Mikrocontroller im Schaltschrankmodul) realisiert sein.

Beispielsweise ist die Schnittstelle des zweiten Schnittstellenmoduls als kabelgebundene Schnittstelle ausgebildet, d.h. die Kopplung zwischen Kommunikationsmodul und Mobilgerät erfolgt mittels Kabel. Dies ist eine einfache und fehlerunanfällige Möglichkeit einer Kopplung, die für viele Mobilgeräte möglich ist, da entsprechende Anschlüsse in der Regel vorliegen.

Beispielsweise ist die Schnittstelle des zweiten Schnittstellenmoduls dabei als Universal Serial Bus (USB)-Schnittstelle ausgebildet, wobei die USB-Schnittstelle zur Stromversorgung des Kommunikationsmoduls ausgebildet ist. Durch Verwendung von USB zum Anschluss des Kommunikationsmoduls an z.B. ein Mobilcomputer ist es möglich, eine separate Stromversorgung des Kommunikationsmoduls entfallen zu lassen und das Kommunikationsmodul über USB, d.h. über die Kommunikationsleitung mit dem benötigten Strom zu versorgen. Dies erspart die Notwendigkeit der Verwendung von z.B. Batterien zur Versorgung des Kommunikationsmoduls.

In einem anderen Beispiel ist die Schnittstelle des zweiten Schnittstellenmoduls als kabellose Schnittstelle ausgebildet. Hierbei wird zwar eine eigene Stromversorgung im Kommunikationsmodul notwendig sein, z.B. über Batterien, allerdings ist das Kommunikationsmodul so flexibler einsetzbar und auch mit Mobilgeräten verwendbar, die keine geeigneten kabelgebundenen Schnittstellen aufweisen, z.B. Smartphones ohne USB-Anschluss.

Weiterhin beispielsweise ist die Schnittstelle des zweiten Schnittstellenmoduls als Bluetooth- oder Wireless Local Area Network (WLAN)-Schnittstelle ausgebildet. Bluetooth oder WLAN sind Technologien, die in üblichen Smartphones und Mobilcomputern realisiert sind, so dass hierdurch eine einfache Möglichkeit geschaffen wird, mit vielfältigen Mobilgeräten die Diagnose- und Statusdaten des Schaltschrankmoduls über das Kommunikationsmodul zu empfangen.

In einer weiteren Ausführung des Kommunikationsmoduls weist dessen Infrarot-Empfänger eine Blende auf, die den sichtbaren Einfallswinkel des Infrarot-Empfängers reduziert. Eine solche Blende sorgt dafür, dass der Infrarotempfänger nur in einem geringen Winkelbereich Infrarotsignale sehen kann, so dass der Empfänger nahe an oder auf eine bestimmte Signal-Infrarot-Leuchtdiode eines Schaltschrankmoduls gehalten werden muss, um die Diagnose- und Statusdaten zu empfangen. Dies erleichtert die Zuordnung des Signals, da so für den Benutzer eindeutig bestimmbar ist, von welchem von vielen, ggf. nah beieinander angeordneten Modulen im Schaltschrank die gerade empfangenen Daten generiert wurden.

Die mit der Erfindung erzielten Vorteile bestehen inbesondere darin, dass durch die Verwendung einer Infrarot-Leuchtdiode als Übertragungsmedium für Diagnose- und Statusdaten eines Sicherheits-Schaltschrankmoduls eine technisch besonders einfache und kostengünstige Möglichkeit der umfangreichen Diagnose eines solchen Moduls geschaffen wird. Insbesondere in Verbindung mit einem kabelgebundenen oder kabellosen oben beschriebenen Kommunikationsmodul lassen sich die Daten auf beliebigen Mobilgeräten wie Laptops oder Smartphones per USB, WLAN oder Bluetooth empfangen und darstellen. Die Diagnose mittels Infrarot-LED ist technisch einfach zu realisieren, günstig, erfordert keine Drittanbietermodule, verursacht keinerlei Probleme hinsichtlich der elektromagnetischen Verträglichkeit und ist im beschränkten Platzumfeld der Frontfläche eines Schaltschrankmoduls problemlos unterzubringen. Zudem ermöglicht die Infrarottechnik aufgrund der Richtungsabhängigkeit eine eindeutige Zuordnung der Daten zu einem bestimmten Modul im Schaltschrank.

Ausführungsbeispiele der Erfindung werden anhand von Zeichnungen näher erläutert. Darin zeigen:
FIG 1 ein System zum kabelgebundenen Auslesen von Diagnose- und Statusdaten aus einem Sicherheitsschaltgeräts,
FIG 2 ein System zum kabellosen Auslesen von Diagnose- und Statusdaten einer modularen Sicherheitssteuerung.

Gleiche Teile sind in allen Zeichnungen mit gleichen Bezugszeichen versehen.

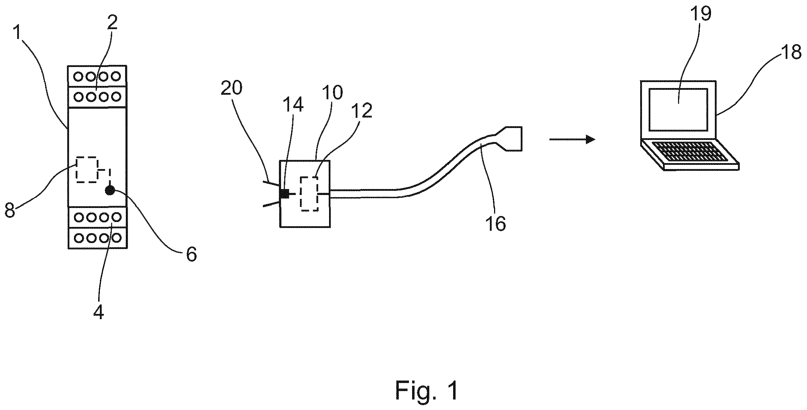

Die FIG 1 zeigt ein Schaltschrankmodul in Form eines mikrocontrollergesteuerten Sicherheitsschaltgeräts 1 (auch als Sicherheitsrelais bezeichnet). Das Sicherheitsschaltgerät 1 ist gemäß der Norm EN ISO 13849 ausgestaltet, so dass es zwei nicht näher gezeigte, redundant arbeitende Mikrocontroller umfasst. Das Sicherheitsschaltgerät 1 ist in der FIG 1 von seiner Frontseite dargestellt und weist Außenmaße von ca. 10 cm Höhe und Tiefe auf, sowie von ca. 2 cm Breite. Es ist zum Einbau in einen nicht näher gezeigten Schaltschrank ausgebildet und wird dort mit einer Vielzahl ähnlicher Module unmittelbar nebeneinander angeordnet sein. Für den Benutzer ist daher in der Regel nur die dargestellte Frontseite erreichbar.

Auf der Frontseite weist das Sicherheitsschaltgerät 1 Klemmen 2 auf der Oberseite und weitere Klemmen 4 auf der Unterseite auf. Diese umfassen Eingangsklemmen und Ausgangsklemmen, die zum Anschluss von Sensoren und Aktoren dienen, sowie Klemmen zur Stromversorgung des Sicherheitsschaltgeräts 1. Das Sicherheitsschaltgerät 1 schaltet nach einem in den Mikrocontrollern hinterlegten Steuerungsprogramm und einer eingestellten Konfiguration die Ausgangsklemmen in Abhängigkeit von den Signalen an den Eingangsklemmen. Das Steuerungsprogramm kann dabei entweder mit einer unveränderlichen Konfiguration versehen sein oder aber nach einer von mehreren hinterlegten Konfigurationen schalten, die durch eine bestimmte Art der Verdrahtung des Sicherheitsschaltgerätes 1 festgelegt wird. In nicht gezeigten alternativen Ausführungsbeispielen kann das Sicherheitsschaltgerät 1 zur Konfigurierbarkeit des hinterlegten Programms auch z.B. ein Einstellrad auf der Frontseite aufweisen, durch das eine Konfiguration ausgewählt wird oder aber das zur Einstellung von Parametern wie Rückfallzeiten dient.

Durch den Platzverbrauch der Klemmen 2, 4 verbleiben auf der Frontseite des Sicherheitsschaltgeräts 1 noch ca. 6 cm mal 2 cm für Anzeigen und Benutzereingaben. Diese werden häufig von (nicht gezeigten) einfachen Statusleuchten oder - wie oben beschrieben - Einstellrädern in Anspruch genommen. Es verbleibt nur wenig Platz für eine Schnittstelle zum Auslesen von Diagnose- und Statusdaten des Sicherheitsschaltgeräts 1.

Zur Lösung dieses Problems ist eine Infrarot-Leuchtdiode 6 an der Frontseite des Sicherheitsschaltgeräts 1 angeordnet. Ein im Inneren des Sicherheitsschaltgeräts 1 angeordnetes Schnittstellenmodul 8, welches ein nicht näher dargestelltes UART-Bauteil umfasst stellt alle E/A-Daten, d.h. aktuelle Signale der Klemmen 2, 4, eine Modulkennung des Sicherheitsschaltgeräts 1, Informationen zum aktuellen Status des Sicherheitsschaltgeräts 1, dessen Konfigurationsdaten (eingestellte Konfiguration und ggf. eingestellte Parameter) und, im Fehlerfall, vorliegende Fehlerinformationen in einem seriellen digitalen Datenstrom zusammen und sendet diesen an die Infrarot-Leuchtdiode 6. Sämtliche zu übertragenden Daten werden dabei von dem Schnittstellenmodul 8 in einem Datenpaket zusammengestellt, welches kontinuierlich in einem seriellen digitalen Datenstrom in wiederkehrenden Zyklen gesendet wird. Im Ausführungsbeispiel wird dabei eine Übertragungsgeschwindigkeit von 115 kbit/s erreicht.

Die FIG 1 zeigt weiterhin ein Kommunikationsmodul 10, welches ein Schnittstellenmodul 12 umfasst, welches dazu ausgebildet ist, die von der Infrarot-Leuchtdiode 6 ausgesandten Datenpakete zu empfangen und zu verarbeiten. Dazu umfasst das Schnittstellenmodul 12 zunächst einen Infrarot-Empfänger 14 in Form eines Phototransistors der die Infrarot-Daten wieder in ein elektrisches UART-Signal wandelt. Das Kommunikationsmodul 10 umfasst weiterhin eine Schnittstelle 16, die als USB-Schnittstelle ausgebildet ist. Die vom ersten Schnittstellenmodul 12 empfangenen Daten werden über die USB-Schnittstelle 16 bereitgestellt, die Teil eines zweiten, nicht näher dargestellten Schnittstellenmoduls ist.

Im Ausführungsbeispiel der FIG 1 wird die USB-Schnittstelle 16 an ein Mobilgerät 18 in Form eines einen üblichen tragbaren Laptops angeschlossen. Es wird ein nicht näher dargestelltes Computerprogrammprodukt bereitgestellt, z.B. als aus dem Internet herunterladbares Softwarepaket, welches das Mobilgerät 18 zum Verarbeiten der über USB empfangenen Daten ertüchtigt. Dieses kann in Ausführungsbeispielen als Terminal-Programm (VT100) oder bevorzugt als Visualisierungsprogramm ausgestaltet sein. In letzterem Fall wird auf der Anzeigeeinheit 20 des Mobilgeräts 18 eine grafische Darstellung des Sicherheitsschaltgeräts 1 und dessen Status z.B. der Ein- und Ausgänge sowie eine Darstellung der Diagnosedaten angezeigt.

Im Ausführungsbeispiel der FIG 1 weist das Kommunikationsmodul 10 keine separate Stromversorgung auf, da es über die USB-Schnittstelle 16 im Betrieb mit Strom versorgt wird. Der Infrarot-Empfänger 14 des Kommunikationsmoduls 10 weist zudem eine Blende 20 auf, die den Sichtbereich des Infrarot-Empfängers 16 beschränkt. Dadurch kann der Infrarot-Empfänger 16 gezielt auf eine Infrarot-Leuchtdiode 6 im Schaltschrank gehalten werden, so dass für den Benutzer eindeutig zu ermitteln ist, von welchem Schaltschrankmodul 1 er derzeit Daten ausliest. Das Kommunikationsmodul 10 kann vorteilhaft auch mit lösbaren Klemmen oder Klammern ausgestattet sein, mit denen es derart auf dem Schaltschrankmodul 1 lösbar befestigt werden kann, dass der Infrarot-Empfänger 14 mit der Infrarot-Leuchtdiode 6 fluchtet.

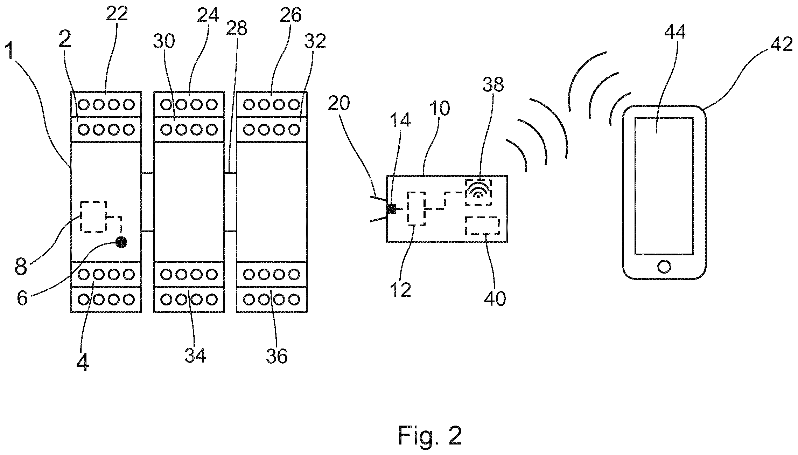

Ein weiteres Ausführungsbeispiel ist in FIG 2 dargestellt und wird nur anhand der Unterschiede zu FIG 1 beschrieben. Nicht näher erwähnte Teile in der FIG 2 sind genauso ausgebildet wie im Ausführungsbeispiel nach der FIG 1.

Das Schaltschrankmodul 1 in der FIG 2 ist als Teil einer modularen programmierbaren Sicherheitssteuerung ausgebildet. Die Sicherheitssteuerung umfasst im Ausführungsbeispiel drei Module 22, 24, 26, die über einen Rückwandbus 28 kommunizieren. Jedes der Module 22, 24, 26 umfasst - wie oben beschrieben - Klemmen 2, 30, 32 auf der Oberseite und Klemmen 4, 34, 36 auf der Unterseite. Die Modularität dient somit der Erweiterung des Schaltschrankmoduls 1 hin zu mehr Schnittstellen. In anderen Ausführungsbeispielen können auch noch weitere Module für spezielle Aufgaben z.B. zur Kommunikation mit Feldbussystemen hinzukommen.

Das Schnittstellenmodul 8 stellt im Ausführungsbeispiel sämtliche über den Rückwandbus 28 empfangenen Daten aller Module 22, 24, 26 zusammen und gibt diese via UART über die Infrarot-Leuchtdiode wie beschrieben aus. In anderen Ausführungsbeispielen kann auch an jedem der Module 22, 24, 26 eine eigene Infrarot-Leuchtdiode mit entsprechendem Schnittstellenmodul vorgesehen sein, die jeweils nur Daten des jeweiligen Moduls, auf dem sie angeordnet ist, ausgibt.

Das Kommunikationsmodul 10 nach der FIG 2 ist hinsichtlich der Art der Schnittstelle 38 abgewandelt: Diese ist als WLAN-Schnittstelle 38 ausgebildet. Da das Kommunikationsmodul 10 somit nicht mehr für einen kabelgebundenen Betrieb ausgebildet ist, weist es eine Batterie 40 als eigene Stromversorgung auf.

Im Ausführungsbeispiel nach der FIG 2 werden die über WLAN gesendeten Daten in einem als Smartphone ausgebildeten Mobilgerät 42 empfangen und in der zu FIG 1 beschriebenen Weise auf der Anzeigeeinheit 44 des Mobilgeräts 42 dargestellt.

Natürlich sind auch Ausführungsbeispiele denkbar, die andere Kombinationen der zu FIG 1 und FIG 2 beschriebenen Merkmale aufweisen. Beispielsweise könnte auch ein Sicherheitsschaltgerät 1 aus FIG 1 mit einem auf WLAN basierenden Kommunikationsmodul 10 aus FIG 2 kombiniert werden, oder umgekehrt eine programmierbare Sicherheitssteuerung nach FIG 2 mit einem auf USB basierenden Kommunikationsmodul 10 aus FIG 1.

### Bezugszeichenliste

- 1: Schaltschrankmodul
- 2, 4: Klemme
- 6: Infrarot-Leuchtdiode
- 8: Schnittstellenmodul
- 10: Kommunikationsmodul
- 12: Schnittstellenmodul
- 14: Infrarot-Empfänger
- 16: Schnittstelle
- 18: Mobilgerät
- 19: Anzeigeeinheit
- 20: Blende
- 22, 24, 26: Modul
- 28: Rückwandbus
- 30, 32, 34, 36: Klemme
- 38: Schnittstelle
- 40: Batterie
- 42: Mobilgerät
- 44: Anzeigeeinheit

## Patentansprüche

1. Schaltschrankmodul (1), ausgebildet zum, gemäß einer Sicherheitsvorschrift, sicheren Ein- und Ausschalten eines elektrischen Verbrauchers, umfassend eine Anzahl von Ausgangsklemmen (2, 4, 30, 32, 34, 36) zum Anschluss von Aktoren zum Schalten des elektrischen Verbrauchers,
eine Anzahl von Eingangsklemmen (2, 4, 30, 32, 34, 36) zum Anschluss von Sensoren,
einen Prozessor, der dazu ausgebildet ist, Ausgangssignale an den Ausgangsklemmen (2, 4, 30, 32, 34, 36) auf Basis einer hinterlegten Programmierung und Eingangssignalen an den Eingangsklemmen (2, 4, 30, 32, 34, 36) zu erzeugen, wobei das Schaltschrankmodul (1) ein Schnittstellenmodul (8) enthält,
das dazu ausgebildet ist, dem Prozessor zugeordnete Diagnose- und/oder Statusdaten zu empfangen und über ein Kommunikationsprotokoll extern bereitzustellen, wobei das Schnittstellenmodul (8) eine Infrarot-Leuchtdiode (6) umfasst und das Kommunikationsprotokoll einen seriellen digitalen Datenstrom definiert.

2. Schaltschrankmodul (1) nach Anspruch 1, das als Sicherheitsschaltgerät ausgebildet ist.

3. Schaltschrankmodul (1) nach Anspruch 1, das als Modul (22, 24, 26) einer modularen Sicherheitssteuerung ausgebildet ist.

4. Schaltschrankmodul (1) nach einem der vorhergehenden Ansprüche, bei dem die Diagnosedaten Warnungen und/oder Fehlerinformationen umfassen.

5. Schaltschrankmodul (1) nach einem der vorhergehenden Ansprüche, bei dem die Statusdaten den Zustand der Ein- und Ausgangsklemmen und/oder einen Gerätestatus des Schaltschrankmoduls (1) umfassen.

6. Schaltschrankmodul (1) nach einem der vorhergehenden Ansprüche, bei dem das Schnittstellenmodul (8) ein Universal Asynchronous Receiver Transmitter (UART)-Bauelement umfasst, welches dazu eingerichtet ist, den digitalen Datenstrom zu erzeugen und an die Infrarot-Leuchtdiode (6) zu senden.

## Claims

1. Switch cabinet module (1) designed to switch an electrical load on and off safely in accordance with a safety regulation, comprising
a number of output terminals (2, 4, 30, 32, 34, 36) for connecting actuators for switching the electrical load,
a number of input terminals (2, 4, 30, 32, 34, 36) for connecting sensors,
a processor designed to generate output signals at the output terminals (2, 4, 30, 32, 34, 36) on the basis of stored programming and input signals at the input terminals (2, 4, 30, 32, 34, 36), wherein the switch cabinet module (1) contains an interface module (8), which is designed to receive diagnostic and/or status data assigned to the processor and to make it available externally via a communication protocol, wherein the interface module (8) comprises an infrared light-emitting diode (6) and the communication protocol defines a serial digital data stream.

2. Switch cabinet module (1) according to claim 1, which is designed as a safety switching device.

3. Switch cabinet module (1) according to claim 1, which is designed as a module (22, 24, 26) of a modular safety controller.

4. Switch cabinet module (1) according to any one of the preceding claims, wherein the diagnostic data comprises warnings and/or error information.

5. Switch cabinet module (1) according to any one of the preceding claims, wherein the status data comprises the state of the input and output terminals and/or a device status of the switch cabinet module (1).

6. Switch cabinet module (1) according to any one of the preceding claims, wherein the interface module (8) comprises a Universal Asynchronous Receiver Transmitter (UART) device adapted to generate and transmit the digital data stream to the infrared light emitting diode (6).

## Revendications

1. Un module d'armoire de distribution (1) conçu, conformément à une règle de sécurité, pour allumer et éteindre en toute sécurité une charge électrique, comprenant
un certain nombre de bornes de sortie (2, 4, 30, 32, 34, 36) pour le raccordement d'actionneurs pour commuter la charge électrique,
un certain nombre de bornes d'entrée (2, 4, 30, 32, 34, 36) pour connecter des capteurs,
un processeur conçu pour générer des signaux de sortie aux bornes de sortie (2, 4, 30, 32, 34, 36) sur la base de signaux d'entrées et de programmation stockés au niveau des bornes d'entrée (2, 4, 30, 32, 34, 36) sont générés, dans lequel le module d'armoire de distribution (1) comporte un module d'interface (8) qui est conçu pour recevoir des données de diagnostic et/ou d'état affectées au processeur et pour les rendre disponibles à l'extérieur via un protocole de communication, dans lequel le module d'interface (8) comporte une diode électroluminescente infrarouge (6) comprend et le protocole de communication définit un flux de données numériques série.

2. Le module d'armoire de distribution (1) selon la revendication 1, qui est conçu comme un dispositif de commutation de sécurité.

3. Le module d'armoire de distribution (1) selon la revendication 1, qui est conçu comme un module (22, 24, 26) d'un contrôleur de sécurité modulaire.

4. Le module d'armoire de distribution (1) selon l'une des revendications précédentes, dans lequel les données de diagnostic comprennent des avertissements et/ou des informations d'erreur.

5. Le module d'armoire de distribution (1) selon l'une des revendications précédentes, dans lequel les données d'état comprennent l'état des bornes d'entrée et de sortie et/ou un état d'appareil du module d'armoire de distribution (1).

6. Le module d'armoire de distribution (1) selon l'une des revendications précédentes, dans lequel le module d'interface (8) comprend un composant émetteur-récepteur asynchrone universel (UART) adapté à la génération et la transmission d'un flux de données numériques vers la diode électroluminescente infrarouge (6 ).
